# EUROPEAN PATENT APPLICATION

(11) **EP 1 489 045 A2**
(43) Date of publication of application: **22.12.2004**
(21) Application number: 04011437.3
(22) Date of filing: 13.05.2004
(51) Int. Cl.: B81C 1/00, B01L 3/00, B81B 1/00

(54) **Microfluidic device and method of manufacturing thereof**

(30) Priority: 19.06.2003 JP 2003175080
(71) Applicant: Dainippon Screen Mfg. Co., Ltd., Kyoto 602-8585 (JP)
(72) Inventor: Haibara, Hitoschi, Dainippon Screen Mfg. Co., Ltd., Horikawa-dori Kamikyo-ku Kyoto 602-8585 (JP); Asada, Kazuhiko, Dainippon Screen Mfg. Co., Ltd., Horikawa-dori Kamikyo-ku Kyoto 602-8585 (JP)
(74) Representative: WILHELMS, KILIAN & PARTNER Patentanwälte

(57) **Abstract**

The whole surfaces (10a, 20a) are made hydrophobic. An upper channel (11) and a lower channel (21) to be stacked on each other to form a flow path (2) are formed in the surfaces (10a, 20a), respectively. A first through hole (12) and a second through hole (13) are formed at predetermined positions in the upper plate (10). The upper plate (10) and lower plate (20) are stacked on each other, and are secured by an upper pressure-contact member (30), a lower pressure-contact member (40) and bolts (51). A microfluidic device capable of preventing leakage of fluid can thereby be manufactured without undergoing a step of irreversible integration. Preferably, the plates are made of Fe-Ni alloy, and hydrophobicity is achieved by boron nitride obtained as a result of surface segregation. The channels are formed by etching.

## Description

### BACKGROUND OF THE INVENTION

### Field of the invention

The present invention relates to a microfluidic device having a tubular flow path formed therein for guiding a small volume of fluid into the flow path, thereby conducting chemical synthesis, chemical analysis or the like, and also relates to a method of manufacturing such microfluidic device.

### Description of the Background Art

Already known is a method of two-dimensionally forming channels in a plurality of plates and stacking the plates to form a stacking body and integrating the stacking body, thereby manufacturing a microfluidic device having two-dimensional or three-dimensional tubular flow paths. Integration is generally conducted by adhesion by an adhesive, sintering by firing, diffusion bonding by heating, or the like, so that, once integrated, the state of integration is maintained semipermanently, so to speak, in an irreversible mode.

A microfluidic device is generally used in a mode in which a certain volume of fluid is guided into a flow path formed therein for conducting chemical synthesis or the like. To conduct intended synthesis or the like, prevention of leakage of the fluid guided into the microfluidic device is required. In a conventional microfluidic device, integration of a stacking body of plates as described above can prevent fluid from leaking out from the gap between the plates.

For instance, a microfluidic device disclosed in Japanese Patent Application Laid-Open No. 2002-102681 is obtained by bonding plates with adhesive layers or the like to achieve integration. A microfluidic device disclosed in National Publication of Translation No. 2002-527254 is obtained by sintering greensheets made of ceramic, organic materials and the like to achieve integration.

However, to achieve such semipermanent integration, a particular step is required such as formation of an adhesive layer by applying an adhesive in the case of adhesion or predetermined heat processing in the case of sintering or heating.

Further, in the case of achieving integration by adhesion, sintering or diffusion bonding, materials and combinations of plates and adhesives that can be used are limited for achieving integration of sufficient degree that can stand use.

Furthermore, the conventional microfluidic device is semipermanently integrated, and therefore cannot be disassembled for cleaning its inside even when clogging occurs in a flow path. In addition, the impossibility of disassembling the device for cleaning forces it to be disposed after one use, particularly in an application such as chemical analysis which requires accurate cleanliness.

### SUMMARY OF THE INVENTION

The present invention is directed to a microfluidic device having a tubular flow path formed therein for guiding a small volume of fluid into the flow path, thereby conducting chemical synthesis, chemical analysis or the like.

According to the present invention, the microfluidic device comprises: a stack of a plurality of plates; and a disassembling-preventing member for preventing disassembling of the plurality of plates, wherein the plurality of plates include a first plate and a second plate stacked on the first plate, a first flat area and a first path area surrounded by the first flat area are defined on a top surface of the first plate, a second flat area in contact with the first flat area and a second path area surrounded by the second flat area and opposed to the first path area are defined on a bottom surface of the second plate, a channel is formed in at least one of the first and second path areas, the first path area and the second path area are complementarily coupled to form a tunnel through which fluid flows, the first flat area and the second flat area have first wettability with respect to the fluid, and the first path area and the second path area have second wettability different from the first wettability with respect to the fluid.

Therefore, fluid does not leak out from a flow path of the microfluidic device without integration of the stacked plates.

Preferably, in the microfluidic device, the plurality of plates are stacked so as to be separated from each other, and the disassembling-preventing member binds and loosens the plurality of plates.

The microfluidic device can therefore be disassembled and cleaned after use, and can be reassembled for reuse. Thus, it does not need to be disposed after single use, which contributes to resource savings particularly when a plurality of such microfluidic devices are used together.

More preferably, in the microfluidic device, the first flat area and the second flat area are hydrophobic.

The function of hydrophobicity can prevent a water-soluble liquid from leaking out from a flow path of the microfluidic device.

It is therefore an object of the present invention to provide the microfluidic device that eliminates the need for integration by a semipermanent method in the manufacturing process, and to provide a method of manufacturing such microfluidic device.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a disassembled perspective view of a microfluidic device according to a first preferred embodiment of the present invention;
Figs. 2A to 2C are schematic sectional views of the microfluidic device according to the first preferred embodiment with fluid being supplied thereto, each taken at a certain position;
Fig. 3 is an enlarged sectional view of the part P shown in Fig. 2B;
Fig. 4 schematically shows manufacturing steps of the microfluidic device according to the first preferred embodiment;
Fig. 5 is a flow chart specifically showing a process of providing hydrophobicity for an Fe-Ni alloy and a subsequent process of forming a channel;
Figs. 6A through 6G are schematic sectional views of a bottom plate in principal steps in the process flow shown in Fig. 5;
Fig. 7 is a disassembled perspective view of a microfluidic device according to a second preferred embodiment of the present invention;
Fig. 8 illustrates a sectional shape of a flow path of the microfluidic device according to the second preferred embodiment;
Fig. 9 is a schematic sectional view of a microfluidic device according to a variant; and
Fig. 10 is a schematic sectional view of a microfluidic device according to another variant.

### DESCRIPTION OF THE PREFERRED EMBODIMENTS

### First Preferred Embodiment

### <Structure of a microfluidic device>

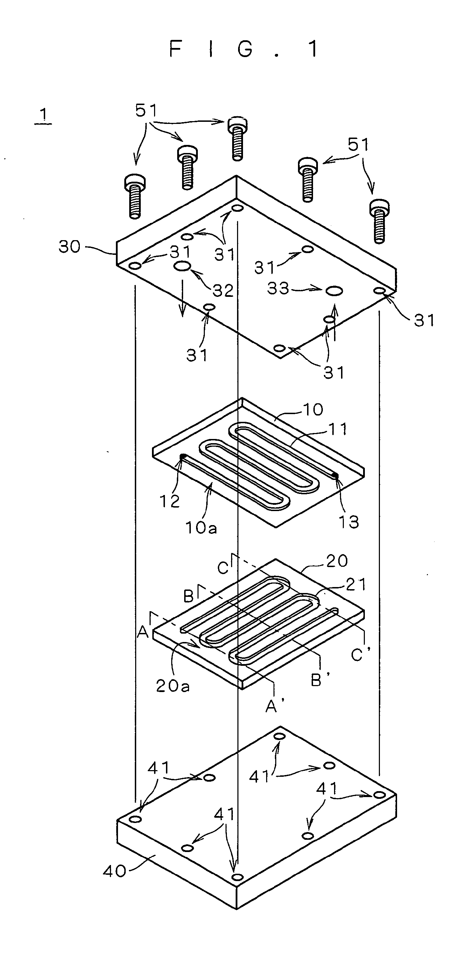

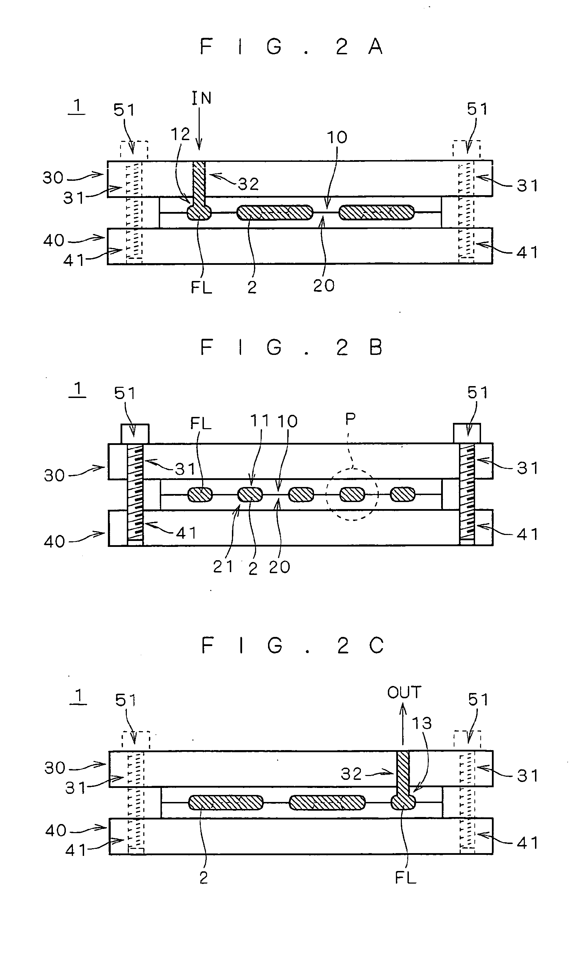

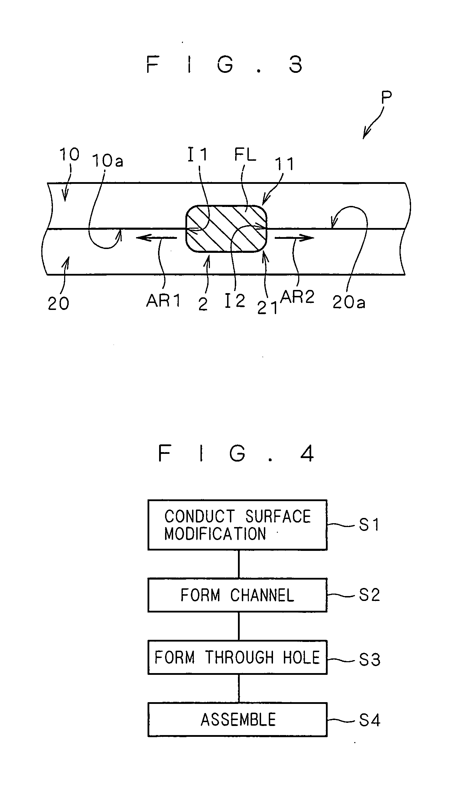

Fig. 1 is a disassembled perspective view of a microfluidic device 1 according to a first preferred embodiment of the present invention. Figs. 2A to 2C are schematic sectional views of the microfluidic device 1 with fluid FL being supplied thereto, taken along the lines A-A', B-B' and C-C', respectively. Fig. 3 is an enlarged sectional view of the part P shown in Fig. 2B.

As shown in Figs. 1 and 2A to 2C, the microfluidic device 1 according to the present embodiment has a structure in which an upper plate 10 and a lower plate 20 are stacked to each other, and with this state maintained, are interposed between an upper pressure-contact member 30 and a lower pressure-contact member 40. The upper pressure-contact member 30 is provided with a plurality of screw holes 31 at appropriate spacing. The lower pressure-contact member 40 is provided with a plurality of screw holes 41 so as to be coaxial with the screw holes 31, respectively. Each pair of screw holes 31 and 41 is threadingly engaged with a bolt 51, so that the upper plate 10 and lower plate 20 are pressed against each other and are secured.

The upper plate 10 and lower plate 20 have an upper channel 11 and a lower channel 21, respectively, formed in a surface 10a and surface 20a to come into contact with each other when being stacked. The upper channel 11 and lower channel 21 are provided so as to form a tubular flow path 2 (Figs. 2A to 2C) through which fluid FL passes when the upper plate 10 and lower plate 20 are stacked. Specifically, the upper channel 11 and lower channel 21 are aligned with each other to show mirror symmetry. Areas on the surfaces 10a and 20a in which the upper and lower channels 11 and 21 are respectively formed will be hereinafter referred to as path areas. In the microfluidic device 1, fluid FL is supplied as will be described later through the flow path 2 provided as described for desired processing such as chemical synthesis. In the present embodiment, the flow path 2 formed by the upper channel 11 and lower channel 21 is repetitively bent to exhibit a serpentine shape, however, this is merely an illustrative example, and the shape and configuration of the flow path 2 is not limited as those illustrated, but various modifications are applicable.

The upper channel 11 formed in the upper plate 10 is previously provided at its opposite ends with a first through hole 12 and a second through hole 13, respectively. Further, the upper pressure-contact member 30 has a first joint part 32 and a second joint part 33 at positions to be immediately above the first through hole 12 and second through hole 13, respectively, when the upper plate 10 and lower plate 20 are pressed for securing as described above. The first joint part 32 and second joint part 33 are both through holes to which, for example, tubular supply and discharge pipes (not shown) for supplying and discharging fluid FL can be attached, respectively.

In the microfluidic device 1, as shown in Fig. 2A, the fluid FL is supplied from the supply pipe (not shown) attached to the first joint part 32 into the flow path 2 through the first joint part 32 and first through hole 12. The fluid FL as supplied flows through the flow path 2. The flow path 2 serves as a reaction tube. Then, as shown in Fig. 2C, the fluid FL (including a reactant, if any) is discharged to the discharge pipe (not shown) attached to the second joint part 33 through the second through hole 13 and second joint part 33.

In the microfluidic device 1 of such structure, an area other than the upper channel 11 in the surface 10a of the upper plate 10 and an area other than the lower channel 21 in the surface 20a of the lower plate 20, that is, areas other than the path areas, are made hydrophobic. In other words, all the areas of the surfaces 10a and 20a that come into contact with each other have hydrophobicity. In the present embodiment, the hydrophobic areas shall be inferior to the upper channel 11 and lower channel 21 in wettability with respect to liquid of the same aqueous solution. In other words, such liquid has a greater contact angle on the hydrophobic areas than in the upper channel 11 and lower channel 21. In the microfluidic device 1 of the present embodiment, the surfaces 10a and 20a to be in contact with each other both have hydrophobicity as described above, which can prevent the fluid FL flowing through the flow path 2 from leaking out from interfaces I1 and I2 between the upper channel 11 and lower channel 21 for forming the flow path 2, as shown in, for example, Fig. 3 by arrows AR1 and AR2.

Japanese Patent Application Laid-Open No. 2002-102681 and National Publication Translation No. 2002-527254 each disclose the mode in which a flow path through which fluid flows is partly hydrophobic, which, however, is not intended to obtain the effect of preventing leakage of fluid from the flow path, as in the present embodiment. Further, a hydrophobic area mentioned in either of these documents is only localized and limited, and therefore, the microfluidic device 1 according to the present embodiment in which all the areas other than channels that come into contact with each other when in stack have hydrophobicity is distinctive.

In short, the present embodiment is characteristic in that a microfluidic device which prevents leakage of fluid can be manufactured without undergoing the step of irreversible integration as in the background art. Further, the microfluidic device 1 of the present embodiment can be disassembled after onetime use by detaching each bolt 51 from a corresponding pair of screw holes 31 and 41. Accordingly, after disassembling and cleaning of the respective components by a predetermined method, the microfluidic device 1 can be reassembled for reuse.

### <Method of manufacturing the microfluidic device>

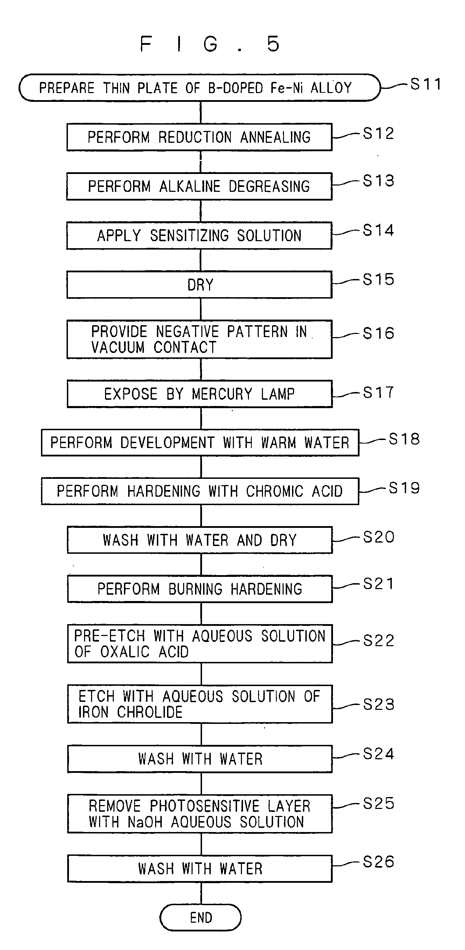

Fig. 4 schematically shows manufacturing steps of the microfluidic device 1 according to the present embodiment. First, the whole surfaces 10a and 20a of the upper plate 10 and lower plate 20 made of a predetermined material are subjected to surface modification for changing the wettability with respect to the same kind of fluid from an original condition (step S1). Next, in order to form the flow path 2 as desired, the surfaces 10a and 20a are both subjected to a channel forming step, so that the upper channel 11 and lower channel 21 are formed (step S2). Then, the first through hole 12 and second through hole 13 are formed at predetermined positions in the upper plate 10 (step S3). Thereafter, the upper plate 10 and lower plate 20 are stacked, and are secured by the upper pressure-contact member 30, lower pressure-contact member 40 and bolts 51 (step S4). Securing by bolts allows the device to be disassembled. The positioning of the plates when stacking them on each other and positioning of the pressure-contact members when contact-pressuring the plates are achieved with high accuracy by providing, for example, positioning pins or positioning stoppers not shown for the respective plates or pressure-contact members.

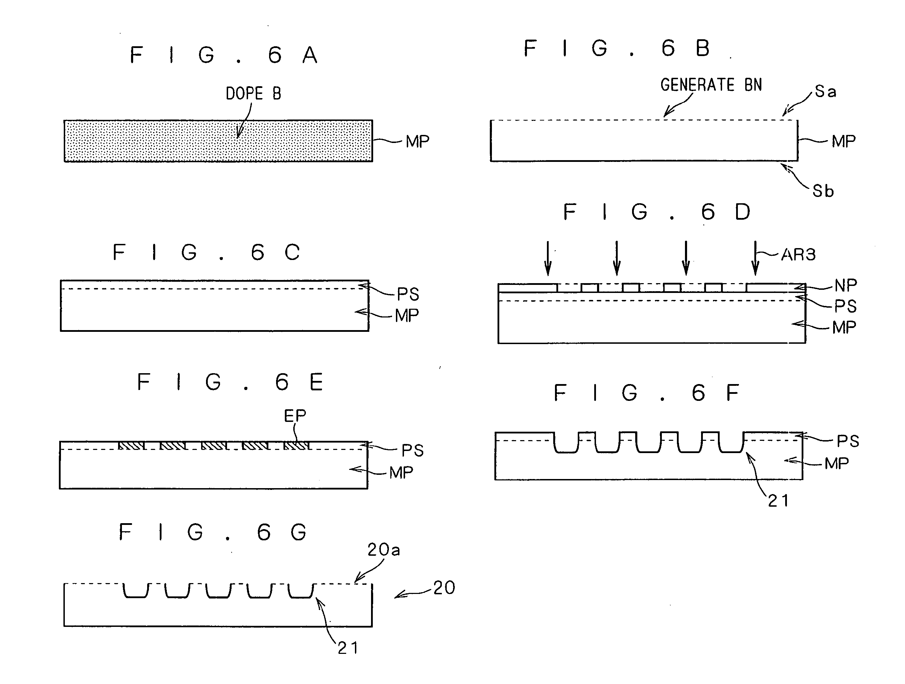

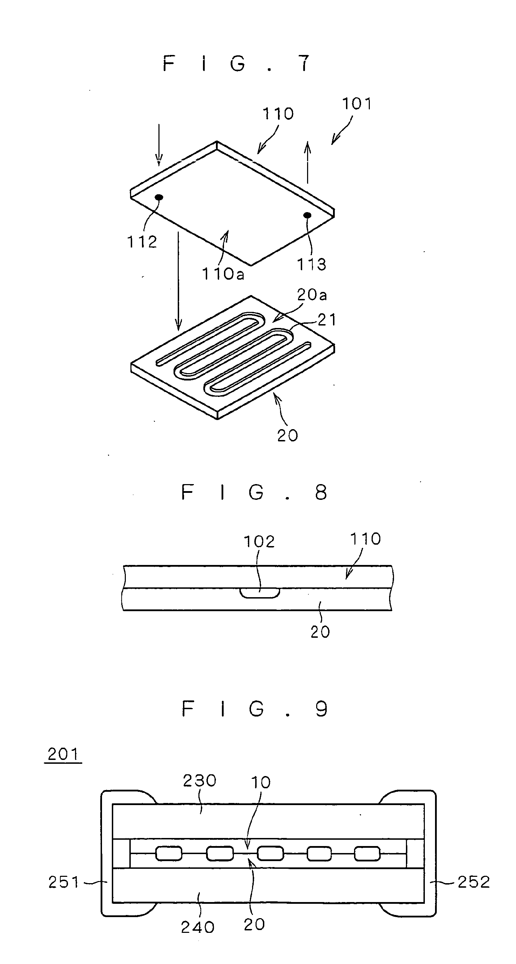

Preferably, the upper plate 10 and lower plate 20 are thin plates of alloy predominantly composed of Fe and Ni (hereinafter referred to as Fe-Ni alloy), and the surface modification achieved on the respective surfaces 10a and 20a is making them hydrophobic, which is resulted from the presence of boron nitride (BN) on the outermost surface of each of the thin plates and in an area immediately adjacent to the outermost surface. Further, the upper channel 11 and lower channel 21 are preferably formed by photoetching. In photoetching, appropriate selection of etching conditions enables accurate formation of channels having a desired depth. Fig. 5 is a flow chart specifically showing the process of providing hydrophobicity (step S1) and the subsequent process of forming the channels (step S2) shown in Fig. 4 according to this preferred embodiment. Figs. 6A through 6G schematically illustrate the state in each of principal steps in the process flow shown in Fig. 5, taking, by way of example, the case of manufacturing the lower plate 20 from a thin piate MP made of Fe-Ni alloy.

In general, a very small amount of boron is originally contained within the thin plate MP for the purpose of increasing ease of rolling when forming a thin plate. In the present embodiment, a thin plate MP containing boron in 1 ppm or more, preferably more than 3 ppm, is used for manufacturing the upper plate 10 and lower plate 20 (step S11). The thickness of the thin plate MP is several millimeters at the greatest. Fig. 6A schematically shows such thin plate MP.

The prepared thin plate MP is subjected to annealing (reduction annealing) at 800 to 900°C for 10 to 30 minutes in an atmosphere of mixed gas of N₂ and H₂ (N₂:H₂ = 92:8) having a dew point lower than 5°C, preferably lower than 0°C (step S12). The dew point is used as an index of permissible concentration of vapor which mixes in the mixed gas as an impurity. Annealing under these conditions causes boron present in the alloy to react to N₂ present in the mixed gas, so that hydrophobic boron nitride (BN) is generated on crystal grains of the Fe-Ni alloy present on the surface, e.g., on the outermost surface, of the thin plate MP. Boron nitride tends to be generated in a greater amount as boron in the Fe-Ni alloy has a higher concentration and as the mixed gas has a lower dew point. Fig. 6B shows the state in which boron nitride is generated scatteringly on a surface Sa of the thin plate MP. For ease of description, Fig. 6B shows that boron nitride is generated only on the upper surface Sa, however, boron nitride may also be generated on a lower surface Sb depending on the type of annealing.

In the thin plate MP with boron nitride generated on its outermost surface through the above process, channels to form a flow path are selectively formed by photoetching as will be described below.

First, the surface of the thin plate MP is subjected to alkaline degreasing with a predetermined alkaline degreasing solution (step S13), and thereafter, a photosensitive solution predominantly composed of milk casein and ammonium bichromate is applied to the surface Sa (step S14), and is dried (step S15). A photosensitive layer having a thickness of several micrometers is thereby generated. Fig. 6C schematically shows the state in which a photosensitive layer PS is generated on the surface Sa.

After the photosensitive layer PS is generated, a negative pattern for forming channels is provided in vacuum contact thereon (step S16), and areas to be channels are exposed to light by a mercury lamp (step S 17). Fig. 6D schematically shows this state. A negative pattern NP is formed on the photosensitive layer PS, to which light is irradiated as indicated by arrows AR3. Fig. 6E illustrates an exposure pattern EP thus obtained with slanted lines.

The exposure is followed by development with warm water (step S18), hardening with chromic acid (step S 19), washing with water and drying (step S20), and thereafter, burning hardening at 200°C (step S21).

After the exposure pattern EP is obtained as described above, the metal surface of areas to be etched away is pre-etched with a 2% aqueous solution of oxalic acid (step S22), and is then etched with an aqueous solution of iron chloride at 50°C of 45 Baumé degrees (step S23), so that a channel of a predetermined depth is formed. Fig. 6F schematically illustrates the lower channel 21 formed by etching.

After washing with water (step S24), the photosensitive layer PS is removed with a 20% aqueous sodium hydroxide (step S25). Then, another washing process follows (step S26), so that the lower plate 20 with the channel 21 to serve as a flow path is obtained. Fig. 6G schematically illustrates the lower plate 20 finally obtained through the above process. In the lower plate 20 shown in Fig. 6G, boron nitride is present scatteringly in areas other than the lower channel 21 in the surface 20a, but is seldom present on the surface of the lower channel 21. which has been newly exposed by photoetching. Through the above process, the lower plate 20 is manufactured with the areas other than the lower channel 21 in the surface 20a made hydrophobic.

As described, in the present embodiment, the channels are formed after the process of providing hydrophobicity. Therefore, even when forming channels in complicated shape, the process of providing hydrophobicity can be conducted with reliability. In the case of using boron nitride for providing hydrophobicity as described above, boron nitride is not necessarily be present evenly in the surface, but may be present scatteringly at least in such a degree that its hydrophobicity can be exercised.

The upper plate 10 is also made hydrophobic through the same process, and the upper channel 11 is formed therein. The upper plate 10 and lower plate 20 thereby obtained are subjected to the process after the step S3 shown in Fig. 4, and the microfluidic device 1 is finally manufactured.

Through the use of Fe-Ni alloy, a thin plate having an area large enough for the size of plates can be obtained, from which a plurality of plates can be cut out. In this case, steps up to either stage in the process shown in Fig. 5 may be performed before cutting out the plates. For instance, it is expected that a steel plate manufacturer ships thin plates of Fe-Ni alloy which have undergone annealing under the conditions corresponding to those in the step S12, and a manufacturer of the microfluidic device 1 according to the present embodiment purchases those thin plates and cuts out plates therefrom in an appropriate stage after the step S13. That is, the process can be effectively performed as compared to the case of forming channels beforehand and providing hydrophobicity for the areas other than the channels, which can reduce manufacturing costs.

### Second Preferred Embodiment

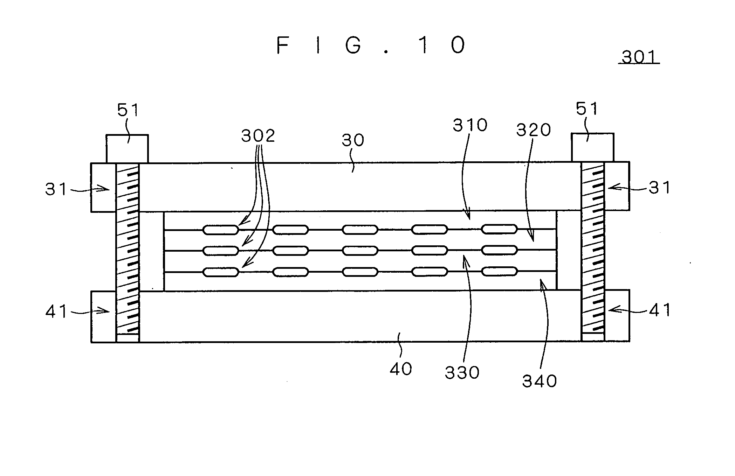

Fig. 7 is a disassembled perspective view of a microfluidic device 101 according to a second preferred embodiment of the present invention. Fig. 8 illustrates a sectional view of a flow path of the microfluidic device 101.

The microfluidic device 101 according to the present embodiment is manufactured in the same mode as the microfluidic device 1 according to the first preferred embodiment in which plates are stacked and are secured under pressure by screws. Therefore, illustration of the upper pressure-contact member 30, lower pressure-contact member 40 and bolts 51 used for securing is omitted in Fig. 7. Further, since the lower plate 20 is manufactured in the same mode as in the microfluidic device 1 according to the first preferred embodiment, the same components are indicated by the same reference characters, and explanation thereof is thus omitted here.

The microfluidic device 101 according to the present embodiment differs from the microfluidic device 1 of the first preferred embodiment in that an upper plate 110 has no channel but has a first through hole 112 and a second through hole 113 only. In this case, a flow path 102 shows asymmetry in cross section between its upper and lower halves as shown in Fig. 8.

In the present embodiment, similarly to the first preferred embodiment, the lower plate 20 is made hydrophobic in areas other than the channel 21 in the surface 20a. It is preferable that the upper plate 110 should have hydrophobicity in an area in a surface 110a that corresponds to an outside area of the flow path 102 (i.e., an area other than a part that is located immediately above the lower channel 21). That is, it is preferable that the surfaces 20a and 110a should be hydrophobic except in a path area formed by the lower channel 21 and the part located immediately thereabove. With such mode, the same effects as described in the first preferred embodiment can be obtained. To be hydrophobic here means that the upper plate 110 is inferior to the lower channel 21 in wettability with respect to the same liquid.

Even in the case where the surface 110a of the upper plate 110 is not hydrophobic, the effects of the present invention are not canceled though reduced.

Further, in the present embodiment, the upper plate 110 is not required to undergo the same process for the lower plate 20, which facilitates forming the respective plates of different materials as compared to the first preferred embodiment. For instance, it is expected that the lower plate 20 is formed of a thin plate of Fe-Ni alloy, and the upper plate 110 is formed of a transparent glass plate. With such mode and if an upper pressure-contact member not shown is formed not so as to obstruct visibility (e.g., to be transparent, or provided with windows, or the like), the flow path 102 can be seen from the upper plate 110 side, which facilitates observing the phenomenon which occurs in the flow path 102 when supplied with fluid.

### Variant

Although the present invention is intended to provide a microfluidic device by mechanically securing plates, the mode for securing plates are not limited to the one described above. Fig. 9 is a schematic sectional view of a microfluidic device 201 obtained by a securing method without using screws. In the microfluidic device 201 shown in Fig. 9, an upper pressure-contact member 230, a lower pressure-contact member 240 and the upper plate 10 and lower plate 20 interposed between the pressure-contact members 230 and 240 are as a whole interposed between clip-like securing members 251 and 252 in two opposite directions, so that the upper plate 10 and lower plate 20 are secured under pressure. In this case, contact pressure can be released by removing the securing members 251 and 252, allowing the device to be disassembled and cleaned.

Alternatively, pressure-contact members having detachable clamping mechanisms may be used for contact-pressure securing.

Further, the above preferred embodiments have described the case in which a two-dimensional flow path is formed by two plates, however, the present invention can also be achieved in the case of constituting a microfluidic device having three-dimensional flow paths. Fig. 10 is a schematic sectional view of a microfluidic device 301 as an example of such case. In the microfluidic device 301, plates 310, 320, 330 and 340 are stacked to form a multistage structure and are secured under pressure by the bolts 51. Flow paths 302 are formed three-dimensionally by these plates. In this case, each of the plates on the respective stages is made hydrophobic on its both surfaces, and through holes not shown for connecting these flow paths 302 are appropriately provided in the respective plates, and the plates are secured under pressure by the bolts 51 threadingly engaged with the screw holes 31 and 41. The same effects as those in the above preferred embodiments can therefore be obtained.

Alternatively, in the case of forming channels in both the upper and lower plates to form a channel, the channels do not necessarily have the same cross sectional shape, but may have different depths from each other, or one may be tapered and the other may have a bottom of curved surface.

Further, in the case of using metal for plates as described in the above preferred embodiments, more effective water-repellent composite plating is applicable in the process of providing hydrophobicity. Water-repellent composite plating is made publicly known by Japanese Patent Application Laid-Open Nos. 6-235095 (1994) and 10-212598 (1998), for example. Such water-repellent composite plating may be applied instead of the above-described process of providing hydrophobicity by generating boron nitride or may be performed after generating boron nitride. In either case, the channels are formed and then filled with, for example, non-conductive resin, and the plates are subjected to water-repellent plating, so that a metallic deposit can be generated on an area other than the channels in the surfaces of the plates.

Furthermore, the above description has been directed to the mode in which the contact surfaces of plates are made hydrophobic, thereby preventing leakage of fluid flowing through the flow paths, however, there may be a case in which leakage of fluid cannot be sufficiently prevented in the mode in which surfaces other than the channels formed in the plates are made hydrophobic as described above, for example, in the case where the fluid is an organic material having lipophilicity. When handling such fluid, surfaces of plates other than the channels are previously provided with lipophobicity instead of hydrophobicity, and the plates are stacked and secured on one another by pressure-contact members. A microfluidic device capable of preventing leakage of fluid when handling such material can therefore be provided. Here, lipophobicity means that the surfaces of plates other than the channels are inferior to the channels in wettability with respect to a solution containing the same organic material as a solvent.

While the invention has been shown and described in detail, the foregoing description is in all aspects illustrative and not restrictive. It is therefore understood that numerous modifications and variations can be devised without departing from the scope of the invention.

## Claims

1. A microfluidic device comprising:
a stack of a plurality of plates; and
a disassembling-preventing member for preventing disassembling of said plurality of plates, wherein
said plurality of plates include a first plate and a second plate stacked on said first plate,
a first flat area and a first path area surrounded by said first flat area are defined on a top surface of said first plate,
a second flat area in contact with said first flat area and a second path area surrounded by said second flat area and opposed to said first path area are defined on a bottom surface of said second plate,
a channel is formed in at least one of said first and second path areas,
said first path area and said second path area are complementarily coupled to form a tunnel through which fluid flows,
said first flat area and said second flat area have first wettability with respect to said fluid, and
said first path area and said second path area have second wettability different from said first wettability with respect to said fluid.

2. The microfluidic device according to claim 1, wherein
said plurality of plates are stacked so as to be separated from each other, and
said disassembling-preventing member binds and loosens said plurality of plates.

3. The microfluidic device according to claim 2, wherein
said first flat area and said second flat area are hydrophobic.

4. The microfluidic device according to claim 3, wherein
said first flat area and said second flat area are provided with boron nitride.

5. The microfluidic device according to claim 4, wherein
each of said plurality of plates is formed of a processed plate generated by annealing metal doped with boron in a reduction atmosphere containing nitrogen.

6. The microfluidic device according to claim 5, wherein
said channel is formed by performing etching on at least one of said top surface of said first plate and said bottom surface of said second plate.

7. The microfluidic device according to claim 6, wherein
said etching is performed after providing hydrophobicity for said top surface of said first plate and said bottom surface of said second plate.

8. The microfluidic device according to claim 1, wherein
a first channel and a second channel are formed in said first path area and said second path area, respectively, and
said first channel and said second channel spatially match each other.

9. A microfluidic device comprising:
a stack of a plurality of plates; and
a disassembling-preventing member for preventing disassembling of said plurality of plates, wherein
said plurality of plates include:
a bottom plate;
a top plate; and
at least one middle plate,
a combination of a flat area and a path area surrounded by said flat area is defined in each of:
a top surface of said bottom plate;
a bottom surface of said top plate; and
top and bottom surfaces of said at least one middle plate,
a channel is formed in at least one of a first path area and a second path area opposed to each other in said stack, thereby forming a tunnel through which fluid flows,
said flat area have first wettability with respect to said fluid, and
said path area have second wettability different from said first wettability with respect to said fluid.

10. The microfluidic device according to claim 9, wherein
said plurality of plates are stacked so as to be separated from one another, and
said disassembling-preventing member binds and loosens said plurality of plates.

11. A method of manufacturing a microfluidic device comprising the steps of:
a) providing first wettability with respect to a predetermined fluid for predetermined surfaces of first and second original plates having second wettability different from said first wettability, said predetermined surfaces including a top surface of said first original plate and a bottom surface of said second original plate;
b) forming a channel in at least one of said top surface of said first original piate and said bottom surface of said second original plate, thereby obtaining first and second plates; and
c) bringing said top surface of said first plate and said bottom surface of said second plate into contact with each other as well as preventing disassembling of said first and second plates, wherein
said channel defines at least part of a tunnel through which said fluid flows.

12. The method according to claim 11, wherein
said step c) includes the steps of:
c-1) stacking said first and second plates so as to be separated from each other; and
c-2) preventing disassembling of said first and second plates using a disassembling-preventing member, wherein
said disassembling-preventing member binds and loosens said first and second plates.

13. The method according to claim 12, wherein
said step a) includes the step of
a-1) providing hydrophobicity for predetermined surfaces of said first and second original plates.

14. The method according to claim 13, wherein
said step a-1) includes the step of
a-1-1) scattering boron nitride into said predetermined surfaces of said first and second original plates.

15. The method according to claim 14, wherein
said first and second original plates are first and second metal plates doped with
boron, respectively, and
said step a-1-1) includes the step of annealing said first and second metal plates in a reduction atmosphere containing nitrogen.

16. The method according to claim 15, wherein
said step b) includes the step of
b-1) performing etching on at least one of said top surface of said first original plate and said bottom surface of said second original plate to form said channel.

17. The method according to claim 16, wherein
an area having said second wettability in at least one of said top surface of said first original plate and said bottom surface of said second original plate is partly exposed by etching performed in said step b-1).

18. The method according to claim 11, wherein
said step b) includes the step of
b-2) forming first channels in said top surface of said first original plate and second channels in said bottom surface of said second original plate, said first and second channels spatially matching each other.
